(19) Europäisches Patentamt
European Patent Office
Office européen des brevets

(11) EP 3 971 325 A1

(12) EUROPEAN PATENT APPLICATION

(43) Date of publication:
23.03.2022 Bulletin 2022/12

(21) Application number: 20306071.0

(22) Date of filing: 21.09.2020

(51) International Patent Classification (IPC):
$C25B\ 1/04$ $^{(2021.01)}$  $B01D\ 53/62$ $^{(2006.01)}$
$C25B\ 1/16$ $^{(2006.01)}$  $C25B\ 1/21$ $^{(2006.01)}$
$C25B\ 11/037$ $^{(2021.01)}$  $C25B\ 15/08$ $^{(2006.01)}$

(52) Cooperative Patent Classification (CPC):
C25B 1/04; B01D 53/62; C01B 3/042; C25B 1/16;
C25B 1/20; C25B 11/037; C25B 15/081;
C25B 15/087; B01D 2251/604; B01D 2257/504

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: TOTAL SE
92400 Courbevoie (FR)

(72) Inventors:
• AYME-PERROT, David
68330 HUNINGUE (FR)
• JAFFER, Shaffiq
Sudbury, MA 10076 (US)

(74) Representative: Lavoix
2, place d'Estienne d'Orves
75441 Paris Cedex 09 (FR)

(54) SYSTEM FOR H2 GENERATION AND CO2 CAPTURE

(57) The present invention relates to a device comprising an (i) electrolysis cell comprising (ia) a negative electrode compartment (20) for the reduction of water ($H_2O$) into dihydrogen ($H_2$) and (ib) a supercapacitive flow compartment as a positive electrode compartment (10), wherein said electrolysis cell is in fluidic communication with a carbonation reactor (50). The present invention also relates to a process comprising the production of dihydrogen ($H_2$) by electrolysis and applications thereof.

FIG.1

EP 3 971 325 A1

**Description**

The present invention concerns a system and process for $H_2$ generation and $CO_2$ capture.

The classical water electrolysis presents some drawbacks.

1/ the large overpotential that is required to achieve industrially relevant current density (due to the sluggish kinetics notably of the oxygen release), hence leading to low energy conversion efficiency (roughly 65%);

2/ the co-generation of $H_2$ and $O_2$ (which are very reactive together) that requires to use specific conductive membranes capable of separating the two gas and a very tight system, which brings about high costs.

That is why the decoupling of water splitting in time and/or space has been investigated.

Several approaches were proposed to proceed to a two-step water splitting, notably:

US 2020/0040467 describes an electrolyzer comprising one catalytic electrode for hydrogen generation (HER) coupled with a redox active positive electrode that replaces the classical catalytic electrode for oxygen generation (OER). Typically the positive electrode is made of nickel hydroxide $Ni(OH)_2$. During the charge, $H_2$ is produced at the cathode and $Ni(OH)_2$ is oxidized in NiOOH at the anode. The system charge must be stopped once the positive electrode is fully charged/oxidized Then the cell must be heated (up to 95°C) which promotes the spontaneous reduction of the NiOOH by water leading back to the $Ni(OH)_2$ electrode's initial state.

WO 201784589 describes an electrolyzer containing 3 electrodes, the 2 classical electrodes for HER and OER which are coupled with a $Ni(OH)_2$ electrode. In a first time, the system HER electrode/$Ni(OH)_2$ electrode is charged generating respectively $H_2$ at the negative electrode and NiOOH at the positive electrode. Then in second time, the system NiOOH electrode/OER electrode is charged leading to the reduction of NiOOH into $NI(OH)_2$ and to the oxidation of water into $O_2$.

WO 2019/193283 describes an electrolyzer having during the charge an OER electrode that generates $O_2$ coupled with one cathode wherein a metal deposition takes place. The metal is chosen to present an important $H_2$ overpotential. Once fully charged, this electrode is coupled with a catalytic HER electrode, which leads to the spontaneous Oxidation of the metal and the concomitant reduction of the proton into $H_2$.

All those approaches consist in a 2-step water splitting which equilibrates the $OH^-/H^+$ ratio at the end of a cycle.

**Goals of the invention**

The present invention aims at solving the technical problem of providing a device and process for the electrolysis of water for the production of hydrogen ($H_2$).

The invention aims at solving the technical problem of providing a device and process for capturing/storing $CO_2$.

In particular, the present invention aims to solve the technical problem of providing a device and process for the electrolysis of water for the production of hydrogen by avoiding the production of oxygen ($O_2$) at the anode, and in particular avoiding the simultaneous production of the two gases, $H_2$ and $O_2$, and thus their potential mixing in the event of an incident.

The present invention aims at solving the technical problem of promoting the rate of hydrogen production by suppressing the slow and limiting reaction of oxygen generation, and thus to be able to work at high current density.

The present invention further aims at solving the technical problem of providing a device and process for the production of hydrogen by water electrolysis having a simpler electrode architecture than existing electrolyzers, in particular in order to reduce manufacturing and operating costs.

The present invention further aims at solving the technical problem of providing a device and process for the electrolysis of water for the production of hydrogen having a good lifetime.

The present invention further aims at solving the technical problem of providing a device and process for the production of hydrogen by water electrolysis with limited environmental impact, preferably from a renewable energy source.

The present invention further aims at solving the technical problem of providing a device and process for the production of hydrogen by water electrolysis with additional benefit on environmental impact.

The present invention aims at solving the above technical problems in a reliable and industrially usable manner.

**Detailed description of the invention**

The invention relates to the generation of hydrogen from an aqueous electrolyte by means of a specific electrochemical device and process.

The electrolysis device (or electrolyzer) according to the invention allows the generation of dihydrogen from water ($H_2O$).

The present invention relates to a device forming an hybrid electrolyzer coupling a supercapacitive flow electrode (instead of an OER electrode) to a HER cathode, thereby promoting the $H_2$ production, and a process operating such a device. In other words, $H_2$ is produced from water in the negative compartment according to the reaction equation $2H_2O + 2e^- \rightarrow H_2 + 2OH^-$ (in alkaline medium), while OH- anions are electrostatically stored at the surface of particles in the positive compartment. Therefore, such device and process lead to an accumulation of $OH^-$ and thereby the overall $[OH^-]/[H^+]$ ratio is de-balanced. The present invention relates to a hybrid electrolyzer producing $H_2$ by electrolysis and involving a supercapacitive flow electrode.

The inventors propose a novel device and process wherein the extra amount of $OH^-$ is used for storing $CO_2$ via a carbonation reactor. According to inventors, such device and process is not a problem that has been addressed so far in the field of electrolyzers. A device and process according to the invention generates $H_2$ and capture $CO_2$.

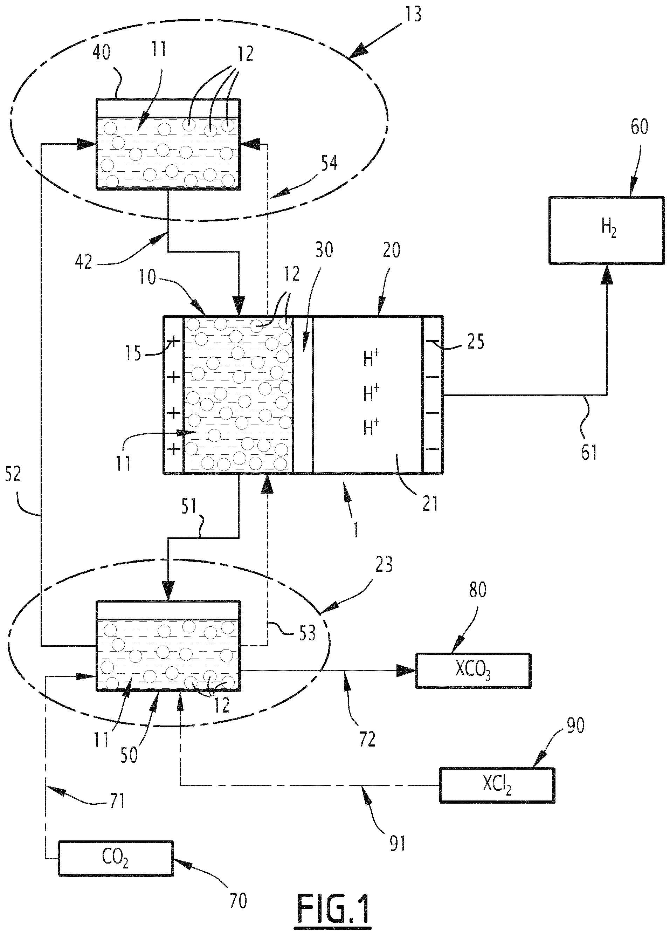

Other aims, characteristics and advantages of the invention will appear clearly to the person skilled in the art upon reading the explanatory description, which makes reference to the Figures and Examples which are given simply as an illustration and which in no way limit the scope of the invention. Figures 1 to 4 are given only for illustrative purpose of some embodiments of the invention.

Thus, every example has a general scope.

The present invention relates in particular to a device comprising an (i) electrolysis cell comprising (ia) a negative electrode compartment 20 for the reduction of water ($H_2O$) into dihydrogen ($H_2$) and (ib) a supercapacitive flow compartment as a positive electrode compartment 10, wherein said electrolysis cell is in fluidic communication with a carbonation reactor 50.

In one embodiment, the supercapacitive particles may flow through said positive electrode compartment 10 from a first zone 13 of discharged supercapacitive particles 12 to a second zone 23 of charged supercapacitive particles 1).

In one embodiment, the hydroxide ions ($OH^-$) are produced in the negative electrode compartment 20 being in excess in comparison with the initial $OH^-$ concentration in the electrolyte 11, and wherein the electrolyte is in fluidic communication 51 between the electrolysis cell and a carbonation reactor 50 having an inlet 71 for injecting $CO_2$, wherein hydroxide ions and carbon dioxide ($CO_2$) are under reacting conditions in said carbonation reactor 50 to form one or more deprotonated forms of carbonic acid or a salt thereof, and wherein said carbonation reactor 50 comprises an outlet 72 for discharging said deprotonated form(s) of carbonic acid or salt thereof from said carbonation reactor 23.

In one embodiment, the transfer of hydroxide ions ($OH^-$) from the negative electrode compartment to said second zone is performed through said positive electrode compartment. Typically, such a transport of negatively charged hydroxide ions is promoted by means of the supercapacitive particles which are positively charged. In traditional industrial electrolyzer cells, the liquid electrolyte flows through both electrode compartments. This is primarily given by utilizing porous diaphragm based separator. In such a case feeding of just one electrode compartment leads to significant electrolyte cross-over. If a dense polymer anion selective membrane is used as a separator, the situation differs. Liquid electrolyte can be fed only to one electrode compartment without significant cross-over. This can result in simplification of the liquid electrolyte circulation.

In one embodiment, the negative compartment has its own electrolyte circulation system. This electrolyte circulation system allows to create an electrolyte flow in the negative compartment by 1/ suppling "new" electrolyte to the cell via an inlet into the cell, 2/ extracting the "OH- concentrated" electrolyte via an outlet. The OH- concentrated electrolyte can then be circulated to a carbonation reactor where $CO_2$ and an alkali or alkaline earth metal, (for example Ca, Mg, etc) based salt are injected leading to the formation of carbonates (for example: Calcium carbonates). The quantity of injected $CO_2$ is controlled to regulate the extra amount of OH- ions and thereby recover the initial $[OH^-]$ concentration, in other words to rebalance the initial overall $[OH^-]/[H^+]$ ratio.

In one embodiment, the source of Ca and/or Mg is brine form seawater desalination, which is injected to the formation of carbonates.

In one embodiment, said second zone 23 comprises said carbonation reactor 50 which forms a storage container of said charged supercapacitive particles 12.

The present invention relates also to a process comprising the production of dihydrogen ($H_2$) by electrolysis, wherein said process comprises operating a device as defined in the present invention.

The present invention relates also to a process comprising the production of dihydrogen ($H_2$) by electrolysis, wherein said process comprises (i) flowing supercapacitive particles 12 into a positive electrode compartment 10 of a electrolysis cell from a first zone 13 containing discharged supercapacitive particles to a second zone 23 containing charged supercapacitive particles 12, (ii) generating dihydrogen ($H_2$) in a negative electrode compartment 20 by water ($H_2O$) electrolysis at a basic pH thereby producing hydroxide ions ($OH^-$) in excess in comparison with the initial OH- concentration in the electrolyte 11, said hydroxide ions being at least in part transferred from said electrolysis cell to said second zone 23, wherein said process comprises providing said second zone 23 with carbon dioxide ($CO_2$) in presence with said hydroxide ions in said second zone 23 to form one or more deprotonated forms of carbonic acid or a salt thereof.

The present invention relates also to a use or a method of a combination of a system having a negative electrode compartment 20 reducing water into dihydrogen and a flow supercapacitor system as positive electrode compartment

EP 3 971 325 A1

10, with a carbonation reactor 50, said flow supercapacitor system being in fluidic communication 51 with said carbonation reactor 50.

In particular, said use or method is for producing dihydrogen and consuming carbon dioxide.

Advantageously, the extra $OH^-$ concentration is used to store $CO_2$ via a carbonation device and process, thereby having a positive effect on environment to limit the amount of $CO_2$ in atmosphere.

Typically, $CO_2$ injected in such a basic medium quantitatively produces one or more deprotonated forms of carbonic acid or a salt thereof, typically as carbonate and/or bicarbonate in solution or solid form. In one embodiment, deprotonated forms of carbonic acid or a salt thereof are mostly as carbonate and in much lower extent as bicarbonate in solution or solid form. Advantageously, it is preferred to inject in a controlled manner an amount of $CO_2$ adapted to mitigate the quantity of $OH^-$ necessary to recover the initial concentration of the electrolyte.

In one embodiment, said deprotonated form of carbonic acid is a carbonate ion ($CO_3^{2-}$) and/or a bicarbonate ion ($HCO_3^-$).

In one embodiment, in a subsequent step of the carbonation reactor, said carbonate is reacted to produce carbon monoxide (CO), or solid carbonate, or a compound comprising carbon, for example a hydrocarbon.

In one embodiment, said second zone comprises a tank 40 storing said charged supercapacitive particles 12 wherein said charged supercapacitive particles are discharging.

Preferably, after carbonation, the electrolyte is recirculated to operate a new cycle in the electrolysis cell and carbonation reactor.

The present invention advantageously limits the concentration of $OH^-$ in the device and process.

The present invention advantageously allows to both generate $H_2$ and store $CO_2$ via the production of solid carbonates as mineralization of $CO_2$.

By providing a chemical carbonation reaction in the second zone wherein the supercapacitive particles are provided, such a device and process can advantageously accelerate the self-discharge of the supercapacitive particles. Advantageously, this allows reducing the time of the regeneration phase of the supercapacitive particles.

In a variant, the device according to the invention produces dihydrogen from solar energy. Accordingly, in one embodiment, the device of the invention is powered by one or more photovoltaic cells.

In one embodiment, said positive electrode compartment 10 forms a supercapacitive suspension electrode.

The terms "supercapacitive electrodes" or "supercapacitive particles" refer to electrodes or electrode particles, respectively, having an electrochemical double layer on the surface or exhibiting redox activity that is akin to pseudo-capacitive behaviour under polarization. The charge storage is of a purely or essentially electrostatic nature.

The terms "supercapacitive compartment" or "supercapacitive flow compartment" refer to a compartment having one or more supercapacitive electrodes or supercapacitive particles.

The capacity (expressed in Farads) of an electrode is: $C = \varepsilon.S/e$, where $\varepsilon$: the relative permittivity of the electrolyte solution, S: the electrode surface (seat of the electrochemical double layer), e: the thickness of the electrochemical double layer.

As the capacity is directly proportional to the electrode surface area of the electrochemical double layer, the supercapacitive electrodes used are generally based on porous carbon developing a large specific surface area (typically between 500 and 3000 m2/g).

Other materials of the metal oxide type (e.g. $MnO_2$, $Fe_3O_4$) which have several degrees of oxidation, or conductive polymers, have a redox activity in an aqueous medium, which is similar to a supercapacitive behaviour, we then speak of pseudo-capacitive materials/systems.

Depending on a variant, the surfaces of the supercapacitive carbon particles are functionalized with the aid of heteroatoms (functions with N, O, etc.) or a redox mediator is added to generate an additional redox activity, which is similar to pseudo-capacity.

All of these carbonaceous materials or metallic oxides are the seat of a surface charge storage, favoring the power of the systems but limiting the amount of storable energy.

In order to increase the energy stored in a supercapacitive system, there are flow supercapacitors (or electrochemical capacitors) based on carbon particles suspended in an electrolyte that are charged by contact with polarized substrate electrodes (K.B.Hatzell, Y. Gogotsi, et al., Electrochimica Acta 111 (2013) 888-897). There is thus a charge transfer from the polarized substrate electrode to the particles. Once charged/polarized, the particles attract the counter-ions of the electrolyte, their surface becoming the seat of a double electrochemical layer (precisely located at the particle/electrolyte interface).

Thus, according to an embodiment, the supercapacitive particles are carbon particles with an electrochemical double layer.

According to another variant, supercapacitive particles are particles with a redox activity comparable to pseudo-capacitive behaviour under polarization.

Advantageously, supercapacitive particles are carbon particles.

Advantageously, the conductive carbon particles have a BET specific surface area greater than $500 m^2/g$.

4

Advantageously, supercapacitive particles have an average diameter of 1 to 500 $\mu$m, preferably 10 to 500 $\mu$m.

In one embodiment, the supercapacitive particles have a mass capacity of 50 to 500 F/g.

In one embodiment, the supercapacitive particles are conductive carbon particles with a mass capacity of 50 to 500 F/g in an aqueous medium.

For example, conductive carbon particles commonly used for supercapacitors can be used, such as activated carbon (AC), carbon fibre-cloth (Active fibres composite - AFC), carbide-derived carbon (CDC), carbon aerogel, graphite, graphene or carbon nanotubes (CNT).

These can be activated carbon blacks such as NORIT A ULTRA® or DARCO® from CABOT.

Typically, the supercapacitive particles are in contact with a conductive substrate in the positive electrode compartment. Typically, the supercapacitive particles become positively charged (polarized) on contact with the electrode (conductive substrate) in the positive electrode compartment.

Typically, the electrode is a conductive substrate resistant in the aqueous medium under consideration: noble metal, stainless steel, carbon, nickel (foam), or nickel alloy.

Typically, the supercapacitive particles are suspended in a charge-conducting liquid medium, referred to as an electrolyte medium.

The electrolytic medium comprising the conductive carbon particles is a solution, preferably an aqueous solution, and typically, a concentrated solution of conductive carbon particles called slurry.

Preferably, the electrolytic medium is an aqueous medium.

Typically, the electrolysis device according to the invention comprises an aqueous electrolytic solution in the positive electrode compartment. Advantageously, the electrolytic medium comprises an electrolyte adapted to the positive electrode compartment.

Typically, the electrolyte in basic medium allows providing the following reaction at the negative electrode: $2H_2O + 2\ e^- \rightarrow H_2 + 2\ OH^-$ (cathodic reaction). Simultaneously, the hydroxyde anion of the electrolyte accumulate on the surface of positively charged supercapacitive particles in the anode compartment.

In one embodiment, the electrolytic medium is alkaline and comprises NaOH or KOH (comprises 3 to 10M, typically 5M).

Preferably, the electrolyte in the positive electrode compartment is the same as that in the negative electrode compartment.

According to a construction method, the carbon/liquid mass ratio of the electrolytic medium containing the conductive carbon particles is 0.05 to 0.95, preferably 0.05 to 0.75.

Typically, the mixture of supercapacitive particles with finer particles of black carbon improves the electric conductivity.

Preferably, the particles are stored outside the electrolytic cell in one or more containers.

Preferably, the device of the invention comprises one or more containers in the first zone comprising said supercapacitive particles, said container(s) being in fluidic communication with the positive electrode compartment.

In one embodiment, a container is positioned upstream an inlet for supercapacitive particles in the positive electrode compartment.

Typically, such a container stores supercapacitive particles in essentially, and preferably totally, discharged form. "Essentially discharged" means that they are sufficiently discharged to allow them to be satisfactorily charged for the operation of the electrolysis device when passing through the positive electrode compartment.

In one embodiment, one or more containers are placed downstream of the outlet of the supercapacitive particles from the positive electrode compartment.

Typically, such a container downstream the positive electrode compartment stores supercapacitive particles in substantially, preferably fully charged form. "Essentially charged" means that they are sufficiently charged after passage through the positive electrode compartment for satisfactory operation of the electrolysis device.

Such container downstream the positive electrode compartment is positioned in the second zone of a device or process according to the invention.

Advantageously, $CO_2$ is injected in said second zone to allow $CO_2$ to evolve in presence of hydroxide ions and thereby provide a pronated form of carbon dioxide.

Advantageously, in one embodiment, a Ca-based salt (for example $CaCl_2$) is injected in the second zone in the carbonation reactor to promote the precipitation of $CaCO_3$ which is insoluble. In one embodiment, the device of the invention comprises a container storing a Ca-based salt (for example $CaCl_2$) in fluidic communication with the carbonation reactor. Advantageously, in one embodiment, if a calcium chloride salt is used, the chloride ion ($Cl^-$) is trapped, for example by using an anionic exchange membrane.

In one embodiment, the device comprises one or more containers upstream the second zone for injecting a Ca-based salt in said second zone.

In one embodiment, the device allows continuous or semi-continuous operation.

According to one embodiment, the device or process of the invention comprises a first storage container (in said first zone) upstream the positive electrode compartment for storing supercapacitive particles in discharged form, which are injected into the positive electrode compartment to be charged therein during their circulation in the positive electrode compartment and are then sent to a second storage container (in said second zone) downstream the positive electrode compartment for storage in charged form. Advantageously, the supercapacitive particles discharge themselves by self-discharge in said second zone. Typically, such (self)discharge can be achieved within a few hours in an aqueous medium, for example overnight (5 to 10 hours). The discharged conductive particles are ready for a new passage through the positive electrode compartment for their charge.

In one embodiment, the supercapacitive particles are discharged by a discharge system.

According to a first embodiment, the supercapacitive particles stored in the second zone can be recycled to the first zone without passing through the positive electrode compartment. In a second embodiment, the supercapacitive particles discharged can flow from the second zone to the positive electrode compartment for circulation and charging, and then the charged particles are sent to the first zone. As in the first cycle, the charged particles are stored in the first zone for sufficient time for discharge. In this way, cycles can be repeated in succession:

According to the first embodiment: first zone -> electrode -> second zone -> first zone.

According to the second embodiment: first zone -> electrode -> second zone -> electrode -> first zone.

Advantageously, the flow of supercapacitive particles is determined according to the instantaneous charge to be stored electrostatically at the positive electrode to counteract the desired/used charge to reduce water/proton to dihydrogen.

Alternatively, the volume of the medium (electrolyte) containing the carbon particles and/or the concentration of the conductive carbon particles in the liquid medium, and thus the size of the storage container(s) containing them, is determined as a function of the capacity and the desired charge of the positive electrode.

Thus, for an operating capacity, the size of the container can be determined accordingly.

Typically, the electrolysis device includes a power supply to create a potential difference between the positive and negative electrodes. Typically, under power supply, the device generates hydrogen until the capacity of the anode compartment (positive electrode compartment) is fully charged.

Any electrolyzer electrode capable of generating hydrogen can be used as the electrode of the negative electrode compartment.

For example, in a basic medium: nickel, nickel alloys can be used.

In one embodiment, it is also advantageous to limit the amount of catalyst (e.g. with a Pt electrode) or to use cheaper catalysts if high current efficiency is not required.

Typically, said positive electrode compartment 10 and negative electrode compartment 20 are separated by a membrane 30. These are separator membranes that may be quite conventional for an electrolyzer. For example, a more conventional separator membrane such as a cellulosic membrane or porous PP/PE films with a surface finish can be used.

Advantageously, the electrolysis device according to the invention is connected to a power supply device enabling a potential difference to be established between the anode and the cathode. According to the state of the art, the electrolysers are dimensioned to operate at high current densities, of the order of 0,2-0.5 A/cm$^2$ in alkaline medium to 1-2 A/cm$^2$ in acidic medium/

The voltage necessary to get such current densities is high, higher or equal to 1.9V (only 1.23 V for the thermodynamic decomposition voltage of water under standard conditions). Typically, the operating voltage corresponds to the sum of the thermodynamic decomposition voltage of water, the kinetic overvoltage at the 2 electrodes and ohmic drop. Here, the slow $O_2$ release kinetic at the anode, which requires an overvoltage of about 0.4 V and above to operate at mentioned currents.

Preferably, said process comprises supplying said electrode cell with electric power at an operating voltage below the decomposition potential of water to avoid generation of dioxygen ($O_2$), optionally said device is powered by one or more photovoltaic cells.

The invention operates at a potential difference between the two electrodes (anode and cathode) less than the operating voltage of a classical electrolyzer, OER being not involved. Typically, thus, the operating voltage corresponds to the sum of the voltage necessary lower than the sum of the thermodynamic decomposition voltage of water, of the HER overvoltage and ohmic drop. Advantageously, the invention allows limiting the operating voltage of the electrolyzer.

Typically, the operating voltage necessary to the electrolyzer is selected to generate dihydrogen at the cathode (HER) but avoiding generating dioxygen at the anode (OER).

Advantageously, a power supply device for applying an operating voltage as described above.

The current density is greater than 10 mA/cm$^2$, for example greater than 100 mA/cm$^2$.

Advantageously, a device according to the invention comprises a negative electrode (HER cathode) combined with a positive electrode (supercapacitive flow electrode).

Advantageously, the invention avoids producing, in particular, simultaneously the two gas $H_2$ and $O_2$, and thus their possible accidental mixture. Indeed, $O_2$ is not produced in the positive compartment electrode.

Advantageously, the invention avoids the provision of a complex device for separating (spatially or temporally) the electrodes.

Advantageously, the invention optimizes the $H_2$ production rate at lower potential and provide added value by using the extra concentration of $OH^-$ to store $CO_2$.

Advantageously, the invention makes it possible to provide a safer electrolysis device ($H_2$ and $O_2$ mixture is avoided).

Advantageously, the invention makes it possible to provide an electrolysis device enabling the production of hydrogen from water, preferably more efficiently and above all less expensively.

Advantageously, the invention allows providing a device and process for dihydrogen production by water electrolysis having a good lifetime, notably with possible recycling over thousands of cycles of supercapacitive particles.

In one embodiment, since only the reduction of water takes place (and not its oxidation), the medium concentrates in $OH^-$ ions, a periodic readjustment of the pH/electrolyte quantity is performed.

In one embodiment, the $OH^-$ concentration is controlled and/or monitored in the second zone and/or in the positive electrode compartment and/or in the negative electrode compartment.

The device or process according to the invention is described within the framework of a relatively simple operation. However, the device or process according to the statement may comprise a plurality of positive and/or negative electrode compartments and a plurality of storage containers. Thus, at each occurrence, the expression "one" (e.g. one electrode) means "at least one" and covers the variants "one or more" (e.g. one or more electrodes).

Advantageously, the invention makes it possible to provide an electrolysis device for coupling with one or more photovoltaic (PV) cells.

Advantageously, the invention makes it possible to reduce the operating voltage and thus advantageously, in particular, to reduce the number of PV cells required to supply electricity to the electrolysis device according to the invention.

Advantageously, the invention makes it possible to supply so-called "green" hydrogen since it is produced from solar energy for the electric power supply of the electrolysis device, as opposed mainly to hydrogen produced by methane reforming.

Other purposes, characteristics and advantages of the invention will become clear to the person skilled in the art after reading the explanatory description which refers to examples which are given only for illustrative purposes and which in no way limit the scope of the invention.

The examples are an integral part of the present invention and any feature appearing new in relation to any prior art from the description taken as a whole, including the examples, is an integral part of the invention in its function and generality.

Thus, each example has a general scope.

On the other hand, in the examples, all percentages are given by weight, unless otherwise specified, and the temperature is expressed in degrees Celsius unless otherwise specified, and the pressure is atmospheric pressure, unless otherwise specified.

Figure 1 schematically represents a device 1 comprising a positive electrode compartment 10 comprising a positive electrode 15 and a negative compartment electrode 20 comprising a negative electrode 25. On figure 1, the power supply for device 1 electrolysis is not shown.

The positive electrode compartment comprises an aqueous electrolyte medium 11 in which conductive carbon particles 12 circulating in the positive electrode compartment 10 are suspended. The conductive carbon particles 12 become positively charged in the positive electrode compartment 10. The negative electrode compartment 20 comprises an aqueous electrolyte medium 21 generating gaseous dihydrogen. The gaseous dihydrogen may be released through a pipe 61 for gas circulation and stored in a container 60.

The electrolyte medium circulating in the positive electrode compartment 10 can be injected from a first storage container 40 via a fluid circulation line 42. Such first storage container 40 is located in the first zone 13. The electrolyte medium 11 circulating in the positive electrode compartment 10 can be directed from the positive electrode compartment 10 to a second storage container 50 via a fluid circulation line 51. The electrolytic medium 11 comprising the conductive carbon particles 12 can be recycled after discharge toward the first storage container 40 through a pipe 52 for fluidic circulation.

Alternatively, the recycling of carbon 12 particles can be achieved by injection from the second reservoir 50 to the positive electrode compartment 10 via a fluid circulation line 53. The conductive carbon particles 12 are positively charged in the positive electrode compartment 10. The electrolytic medium 11 comprising the conductive carbon particles 12 is then directed through a pipe 54 for fluidic circulation to a first storage container 40.

The charged 12 conductive carbon particles are discharged into the storage container 40 and/or 50, depending on the design.

Asymmetric system generates $H_2$ in the cathodic compartment and stores energy electrostatically in the anodic compartment by flowing supercapacitive particles from a first zone having a storage container 40 to a second zone having a storage container 50. When operating in a basic electrolyte (eg. KOH 5M), the system consumes $H_2O$ at the

cathode and generates OH- according to the reaction: $2H_2O + 2 e^- \rightarrow H_2 + 2 OH^-$. Therefore, an extra quantity of hydroxide ions (OH-) is produced in the electrolyte and the positive electrode compartment 10 contains hydroxide ions.

The charged supercapacitive particles are stored in the second storage container 50. Such second storage container 50 is located in the second zone 23. Therefore, the second storage container 50 and second zone 23 contain also hydroxide ions.

Advantageously, $CO_2$ stored in a container 70 is injected through a pipe 71 in the second zone 23 in a controlled manner to create in presence of the hydroxide ions one or more deprotonated forms of carbonic acid.

In one embodiment, an alkali or alkaline earth metal salt, (for example $CaCl_2$) stored in a container 90 is injected through pipe 91 from said container 90 to the carbonation reactor 50 to provide solid carbonates XCO3 (typically $CaCO_3$ in case of $CaCl_2$) which can be stored in container 80. Advantageously the carbonation reactor also works as or comprises a liquid/solid separator in order to separate the precipitated $XCO_3$, for example $CaCO_3$, from the liquid electrolyte.

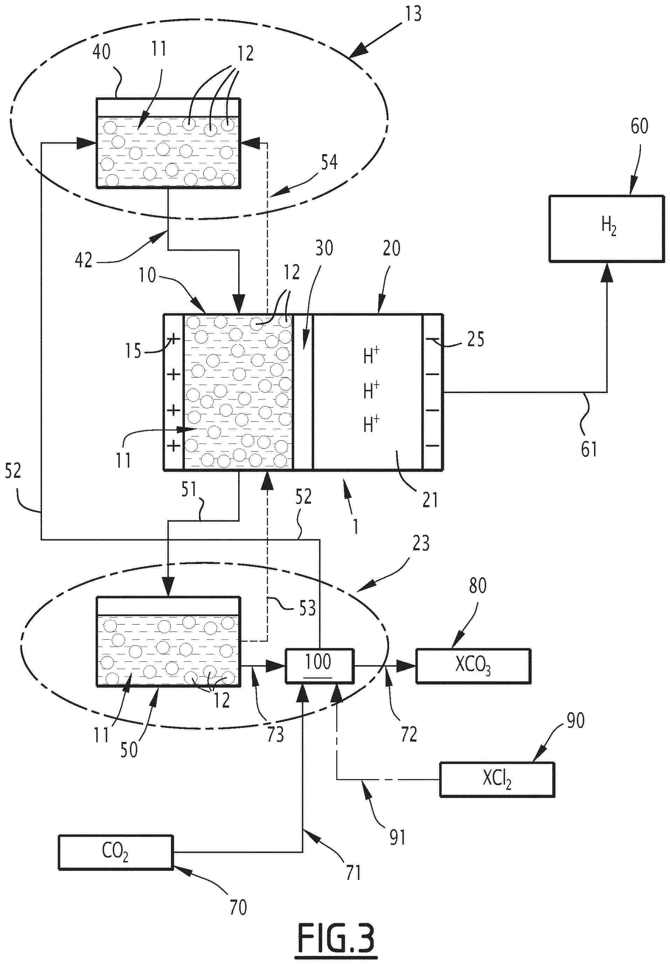

In another embodiment (figure 3), the storage container 50 and the carbonation rector 100 are separate devices preferably linked by one or more pipes 73 for fluidic circulation of the hydroxide ions from the second storage container 50 to the carbonation reactor 100. Accordingly, the injected $CO_2$ is trapped by the system via a carbonation reaction/process. The produced deprotonated form of carbonic acid or salt thereof can be stored in a container 80 downstream the second storage container 50 which are in fluidic communication via a pipe 72.

Accordingly, the invention consists in a 2-step process :

1/ Generation of $H_2$,
2/ $CO_2$ storage.

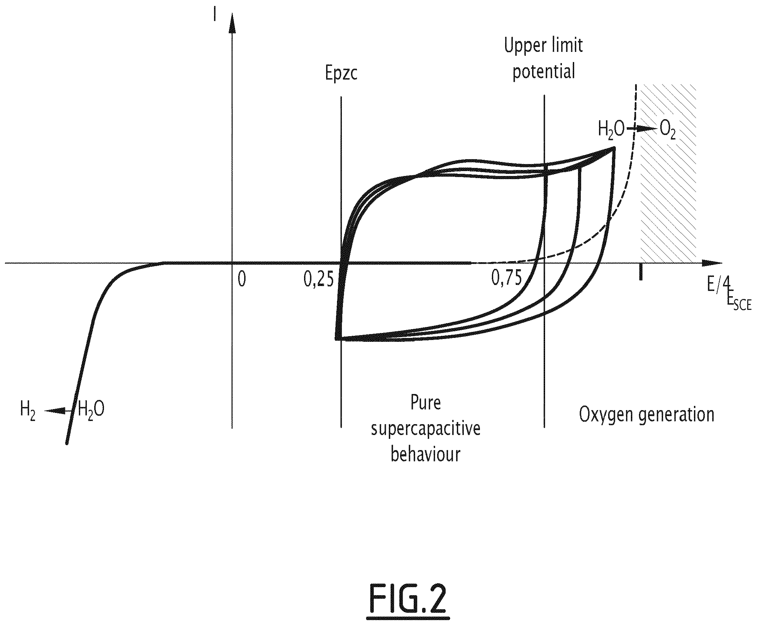

Figure 2 illustrates the behaviour of the negative electrode in linear voltammetry and the response of the positive electrode in cyclic voltammetry (calomel reference electrode).

Figure 3 schematically represents a device 1 comprising a positive electrode compartment 10 comprising a positive electrode 15 and a negative compartment electrode 20 comprising a negative electrode 25. On figure 3, the power supply for device 1 electrolysis is not shown. Such device 1 according to figure 3 is similar to a device 1 according to figure 1, except the carbonation reactor is separate from the second storage container 50. $CO_2$ stored in a container 70 is injected through a pipe 71 in the second zone 23 in a controlled manner to create in presence of the hydroxide ions, one or more deprotonated forms of carbonic acid, which leads to the formation of an insoluble salt thereof (designated "$XCO_3$", wherein X is one or more alkali or alkaline earth metal, for example Ca, Mg, etc.) by carbonation reaction in the carbonation reactor 100, reducing at least in part the hydroxide ions concentration. The electrolytic medium 11 comprising the conductive carbon particles 12 can be recycled after discharge toward the first storage container 40 from the carbonation reactor 100 through a pipe 52 for fluidic circulation to the first storage container 40. In such an embodiment, the conductive carbon particles 12 are recirculated from the second storage container 50 to the first storage container 40 and the electrolyte 11 is recirculated through the carbonation reactor 100 to react with $CO_2$ prior to being recirculated to the first storage container 40.

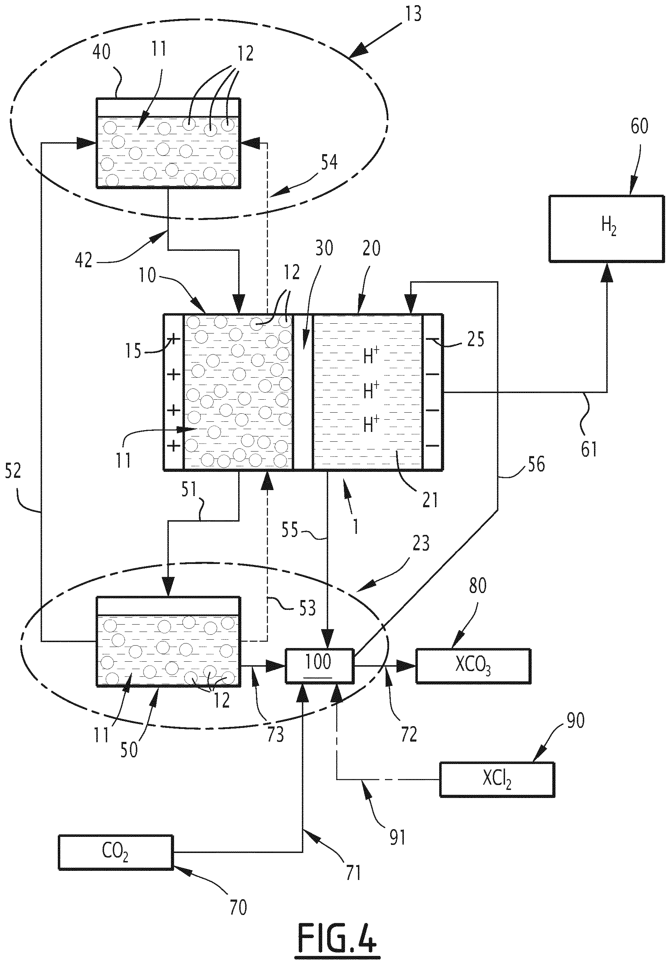

Figure 4 schematically represents a device 1 comprising a positive electrode compartment 10 comprising a positive electrode 15 and a negative compartment electrode 20 comprising a negative electrode 25. On figure 4, the power supply for device 1 electrolysis is not shown. Such device 1 according to figure 4 is similar to a device 1 according to figure 3, except electrolyte 11 of the positive electrode compartment 10 and electrolyte 21 of the negative compartment electrode 20 are not in contact and physically separated by membrane 30. Electrolytes 11 and 21 have separate circuit of circulation. Electrolyte 11 is from the first storage container 40 to the positive electrode compartment 10 and then to the second storage container 50. Electrolyte 11 can be recirculated back to the first storage container 40 from the second storage container 50.

Electrolyte 21 is from the negative electrode compartment 20 to the carbonation reactor 100. $CO_2$ stored in a container 70 is injected through a pipe 71 in the reactor 100 in a controlled manner to create in presence of hydroxide ions, one or more deprotonated forms of carbonic acid which leads to the formation of an insoluble salt thereof (designated "$XCO_3$", wherein X is one or more alkali or alkaline earth metal, for example Ca, Mg, etc.) by carbonation reaction in the carbonation reactor 100, reducing at least in part the hydroxide ions concentration.

Electrolyte 21 can be recirculated back to the negative electrode compartment 20 from the carbonation reactor 100 via the pipe 56.

The Examples make up an integral part of the present invention, and any feature, which appears novel with respect to any prior state of the art from the description taken in its entirety, including the Examples, makes up an integral part of the invention in its function and in its generality.

**Examples** :

The particle size is classically defined by particle size analysis such as: dynamic light scattering (particles suspended in a liquid, typically water), or laser diffraction.

The specific surface area (m2/g) of the particles is classically defined by nitrogen adsorption and BET analysis (Brunauer, Emmett and Teller).

The capacities of the carbon electrodes are determined by potentiometry or cyclic voltammetry. Typically, the working electrode to be characterized is immersed in the electrolyte and is connected to a counter electrode (usually inert) via a potentiostat/galvanostat. A reference electrode, e.g. calomel in an aqueous medium, is used to measure the change in its potential as a function of the charge carried between the working electrode and the counter-electrode. In potentiometry, a constant current is applied to the electrode, its potential increases linearly as a function of the load applied from its potential of zero charge to the maximum limit potential applied. The capacitance then corresponds to the inverse of the slope obtained. In linear or cyclic voltammetry, the potential is swept (at a pre-defined rate in mV/s) from zero charge potential to the limit potential, the current response is a plateau. The ratio of the current I of this plateau by the sweep rate gives the capacity of the electrode.

**Example 1** - **"Static" hybrid system (lab scale)**

For example 1, an electrochemical cell consists in :

- one HER negative electrode (Ni alloy catalyst coated on a Ni substrate)
- one supercapacitive positive electrode made of a porous monolithic carbon (specific surface area : 500 $m^2/g$),

The apparent surface of both electrode is 1 $cm^2$.

Dimensions of the carbon electrode :

Surface : 1 $cm^2$
Thickness : 300 $\mu m$
Volume : 0,03 $cm^3$

The electrolyte is a KOH 5M solution.

Once the cell powered, one can observe:
An « HER » reaction at the negative electrode :

$$2H_2O + 2\,e^- \rightarrow H_2 + 2\,OH^-$$

The carbon electrode is charged positively under polarization. The OH- ions of the electrolyte are attracted by the positive charge of the surface: an electrochemical double layer is formed at the electrode/electrolyte interface.

The carbon electrode has a positive specific capacitance : $C_m$=100 F/g, and its density is 0,9.

The volume capacitance is equal to : $C_V$ = 100 x 0,9 = 90 $F/cm^3$

Therefore the capacity of the electrode C = $C_V$ x V = 90 * 0,03 = 2,7 F

The potential of zero charge of the carbon electrode in KOH 5M is : E(PZC) = - 0,2V vs HNE (HNE : Hydrogen Normal Electrode)

The positive carbon electrode displays a pure capacitive behavior on the potential range from -0,2 V a 0,3 V ($\Delta U$ = 0,5 V).

Therefore, the charge Q that can be stored in the carbon electrode is : Q= C x $\Delta U$ = 2,7 x 0,5 = 1,35 C (Coulomb)

Reminder:

$$Q = I \times t = C \times U$$

So the charging time of the carbon electrode (= working time of the cell) : t = (CxU)/I

In the case of a constant current supply, the corresponding charging time is calculated:

[Table 1]

| constant current supply (mA/cm2) | Charging time (s) |
|---|---|
| 10 | 135 |
| 100 | 13,5 |
| 500 | 2,7 |

The charge that is stored in the (+) capacitive electrode corresponds to the useful charge to generate $H_2$. Q=1,35 C

As a reminder: 1F = 96500 C/mol ; molar volume gas : 22,4 L/mol

In such conditions : n(mol e-) = Q/F= 1,35/96500 = 1,40.10⁻⁵ mol, and n(mol $H_2$) = n(mol e-)/2 = 6,99.10⁻⁶ mol, so the maximum volume of hydrogen that can be generated is : **Vol($H_2$) = 0,157 mL** (for 1 $cm^2$ of electrode)

With a « static » system, the capacity of the supercapacitive monolithic electrode is very limited in comparison with a faradaic electrode, which limits the production of hydrogen. On the contrary, in the present invention, a supercapacitive particles flow is implemented. (example 2).

So, in the present invention, the finite charge of carbon (particles) is renewed thanks to an adapted flow.

**Example 2 - « Dynamic » hybrid system**

**GENERATION OF $H_2$**

For example 2, an electrochemical cell consists in :

- one HER negative electrode (Ni alloy catalyst coated on a Ni substrate) in the negative compartment
- one positive electrode made of a stainless steel grid substrate coupled with a carbon particles flow

The apparent surface of electrode is still 1 $cm^2$ (as for example 1)

Under power:

The « HER » reaction takes place at the negative electrode :

$$2H_2O + 2 e^- \rightarrow H_2 + 2 OH^-$$

The conductive carbon particles flowing in the positive compartment get charged on contact with the stainless steel electrode (substrate)

The same capacitive characteristics for the carbon particles as the monolithic carbon in Example 1 are kept.

Rate of carbon particles in the aqueous electrolyte ("slurry"): 0.25 (solid / liquid mass ratio).

Working current density is fixed at 100 mA/$cm^2$.

Electrode surface area : S=1 $cm^2$

Reminder: the charging time of a carbon electrode of 0,03 $cm^3$ is 13,5 s at 100 mA/$cm^2$ (see example 1).

So the quantity of slurry used for 1 hour of operation at 100 mA/$cm^2$ is worth:

[Table 2]

| Working time (h) (at 100 mA/$cm^2$) | Charge (C) | Equivalent volume of carbon particles ($cm^3$) | Slurry volume (circulated) ($cm^3$) | Slurry flow rate ($cm^3$/h/$cm^2$ electrode) | $H_2$ volume (cm3) |
|---|---|---|---|---|---|
| 1 | 360 | 8 | 32 | 32 | 41,8 |
| 10 | 3600 | 80 | 320 | 32 | 418 |

Let the electrode surface S=1 $m^2$, dI = 100 mA/$cm^2$

[Table 3]

| Working time (h) (at 100 mA/cm2) | Charge (C) | Equivalent volume of carbon particles ($m^3$) | Slurry volume (circulated) ($m^3$) | Slurry flow rate ($m^3$/h/$m^2$ electrode) | $H_2$ volume (m3) |
|---|---|---|---|---|---|
| 10 | 36.10⁶ | 0,8 | 3,2 | 0,32 | 4,18 |

**CO$_2$ CAPTURE**

The conditions are: electrode surface S= 1 m$^2$, dl = 100 mA/cm$^2$, working time = 10h. Among the 3,2 m$^3$ of slurry volume that is circulated, 2,4m$^3$ of KOH electrolyte is used. The number of initial OH- ions is n$_i$(OH-)=CxV= 5x2400 = 12000 mol.

Knowing that the charge used for the electrolysis is :

$$Q=i[A]xt[s] = 1000x(10x3600)=36.10^6 \text{ C}$$

$$n(e\text{-})_{used} = 36.10^6/96500 = 373,06 \text{ mol}$$

According to the reaction 2H$_2$O + 2 e- → H$_2$ + 2 OH$^-$

$$n(OH\text{-})_{produced} = n(e\text{-})_{used} = 373,06 \text{ mol}$$

⇒ n$_{final}$(OH-) = n(OH-)$_{produced}$ + n$_i$(OH-) = 12373,06 mol => [OH-]$_{final}$ = 5,155 M

This extra quantity of OH- is regulated via the injection of CO$_2$ to recover the initial concentration at the entrance of the electrolyzer for a new cycle.

The equilibrium reactions involving CO2, HCO$_3^-$, CO$_3^{2-}$ are as follows:

(Eq.1)        H$_2$O + H$_2$CO$_3$ ↔ H$_3$O$^+$ + HCO$_3^-$ : pka$_1$ = 6,37

(Eq.2)        H$_2$O + HCO$_3^-$ ↔ H$_3$O$^+$ + CO$_3^{2-}$ : pka2 = 10,32

(Overall equation : Eq.3)

$$CO_2 + H_2O \rightleftarrows H_2CO_3 \rightleftarrows H^+ + HCO_3^- \rightleftarrows 2\,H^+ + CO_3^{2-}.$$

According to the equation 2: We remind that: $K_e = [H^+].[OH^-] = 1.10^{-14}$ Consequently :

$$Ka_2 = \frac{[H^+].[CO_3^{2-}]}{[HCO_3^-]}$$

$$\frac{[CO_3^{2-}]}{[HCO_3^-]} = \frac{ka_2}{[H^+]} = \frac{ka_2}{ke/[OH^-]}$$

For a [OH-] = 5M, [H+] = ke/[OH-] = 10$^{-14}$/5 = 2.10$^{-15}$

$$\frac{[CO_3^{2-}]}{[HCO_3^-]} = \frac{ka_2}{[H^+]} = \frac{ka_2}{ke/[OH^-]} = \frac{1.10^{-10,32}}{2.10^{-15}} = 0,5.10^{4,68}$$

For a [OH-] = 5,15M, [H+] = ke/[OH-] = 10$^{-14}$/5,15 = 1,94.10$^{-15}$ => [CO$_3^{2-}$]/[HCO$_3^-$]=0,515.10$^{4,68}$)

At such concentrations of OH- and corresponding pH(>14), this calculation shows that carbonate ions are far the majority species.

In those conditions, by injecting a Ca based salt such as CaCl$_2$, the CO$_3^{2-}$ ions react with Ca$^{2+}$ to form CaCO$_3$ that precipitate since it is insoluble in water.

Moreover, as long as CaCO$_3$ precipitates, the equilibrium shifts from HCO$_3$- to CO$_3^{2-}$

So the invention based upon an alkaline electrolyte works as a CO$_2$ sink under the form of CaCO$_3$ and regulate the [OH-].

Note: Water "consumed" during operation

$n(H_2O)_{consumed} = n(e-)_{used} = 373,06$ mol

$m(H20)_{consumed} = 6715g$

$H_2O_{consumed}$ flow: 0,67L/h = Amount of electrolyte to inject in the cell

**Claims**

1. A device comprising an (i) electrolysis cell comprising (ia) a negative electrode compartment (20) for the reduction of water ($H_2O$) into dihydrogen ($H_2$) and (ib) a supercapacitive flow compartment as a positive electrode compartment (10), wherein said electrolysis cell is in fluidic communication with a carbonation reactor (50).

2. The device of claim 1, wherein supercapacitive particles may flow through said positive electrode compartment (10) from a first zone (13) of discharged supercapacitive particles (12) to a second zone (23) of charged supercapacitive particles (12).

3. The device of claim 2, wherein hydroxide ions ($OH^-$) are produced in the negative electrode compartment (20) being in excess in comparison with the initial $OH^-$ concentration in the electrolyte (11), and wherein the electrolyte is in fluidic communication (51) between the electrolysis cell and a carbonation reactor (50) having an inlet (71) for injecting $CO_2$, wherein hydroxide ions and carbon dioxide ($CO_2$) are under reacting conditions in said carbonation reactor (50) to form one or more deprotonated forms of carbonic acid or a salt thereof, and wherein said carbonation reactor (50) comprises an outlet (72) for discharging said deprotonated form(s) of carbonic acid or salt thereof from said carbonation reactor (23).

4. The device of any one of claims 1 to 3, wherein said positive electrode compartment (10) forms a supercapacitive suspension electrode.

5. The device of any one of claims 1 to 4, wherein said positive electrode compartment (10) and negative electrode compartment (20) are separated by a membrane (30).

6. The device of any one of claims 1 to 5, wherein said second zone (23) comprises said carbonation reactor (50) which forms a storage container of said charged supercapacitive particles (12).

7. The device of any one of claims 1 to 6, wherein said device is powered by one or more photovoltaic cells.

8. A process comprising the production of dihydrogen ($H_2$) by electrolysis, wherein said process comprises operating a device as defined in any one of claims 1 to 7.

9. A process comprising the production of dihydrogen ($H_2$) by electrolysis, wherein said process comprises (i) flowing supercapacitive particles (12) into a positive electrode compartment (10) of a electrolysis cell from a first zone (13) containing discharged supercapacitive particles to a second zone (23) containing charged supercapacitive particles (12), (ii) generating dihydrogen ($H_2$) in a negative electrode compartment (20) by water ($H_2O$) electrolysis at a basic pH thereby producing hydroxide ions ($OH^-$) in excess in comparison with the initial $OH^-$ concentration in the electrolyte (11), said hydroxide ions being at least in part transferred from said electrolysis cell to said second zone (23), wherein said process comprises providing said second zone (23) with carbon dioxide ($CO_2$) in presence with said hydroxide ions in said second zone (23) to form one or more deprotonated forms of carbonic acid or a salt thereof.

10. The process of claim 8 or 9 wherein said deprotonated form of carbonic acid is a carbonate ion ($CO_3^{2-}$) and/or a bicarbonate ion ($HCO_3^-$).

11. The process of any one of claims 8 to 10, wherein said carbonate is reacted to produce carbon monoxide (CO), or solid carbonate, or a compound comprising carbon, for example a hydrocarbon.

12. The process of any one of claims 8 to 11, wherein said second zone comprises a tank (40) storing said charged supercapacitive particles (12) wherein said charged supercapacitive particles are discharging.

13. The process of any one of claims 8 to 12, wherein said process comprises supplying said electrode cell with electric power at an operating voltage below the decomposition potential of water to avoid generation of dioxygen ($O_2$), optionally said device is powered by one or more photovoltaic cells.

**14.** Use of a combination of a system having a negative electrode compartment (20) reducing water into dihydrogen and a flow supercapacitor system as positive electrode compartment (10), with a carbonation reactor (50), said flow supercapacitor system being in fluidic communication (51) with said carbonation reactor (50).

**15.** The use of claim 14 for producing dihydrogen and consuming carbon dioxide.

**FIG.1**

FIG.2

FIG.3

## FIG.4

Europäisches Patentamt

European Patent Office

Office européen des brevets

# EUROPEAN SEARCH REPORT

Application Number

EP 20 30 6071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/169452 A1 (CONSTANTZ BRENT R [US] ET AL) 2 July 2009 (2009-07-02) | 1,3,5,7, 8,10,11, 14,15 | INV. C25B1/04 B01D53/62 |
| A | * paragraphs [0113] - [0117] * <br> * paragraph [0171] * <br> ----- | 2,4,6,9, 12 | C25B1/16 C25B1/21 C25B11/037 C25B15/08 |
| X | US 2012/183462 A1 (RAU GREGORY HUDSON [US]) 19 July 2012 (2012-07-19) | 1-5,7,8, 10-12, 14,15 | |
| A | * paragraph [0064] - paragraph [0071]; figures 4, 5; example 4 * <br> * paragraph [0044] * <br> ----- | 6,9,13 | |
| X | US 2017/306510 A1 (ROTHSCHILD AVNER [IL] ET AL) 26 October 2017 (2017-10-26) | 1-4,7,8, 12,13 | |
| A | * claims 1, 2, 4, 6, 17, 19 * <br> * paragraph [0207] * <br> ----- | 5,6, 9-11,14, 15 | |

TECHNICAL FIELDS SEARCHED    (IPC)

C25B
B01D

The present search report has been drawn up for all claims

| Place of search | Date of completion of the search | Examiner |
|---|---|---|
| Munich | 1 March 2021 | Desbois, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 30 6071

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2021

| Patent document cited in search report | Publication date | Patent family member(s) | Publication date |
|---|---|---|---|
| US 2009169452 A1 | 02-07-2009 | AR 070056 A1 | 10-03-2010 |
| | | AU 2008278301 A1 | 16-07-2009 |
| | | AU 2010200225 A1 | 11-02-2010 |
| | | BR PI0821515 A2 | 24-09-2019 |
| | | CA 2652803 A1 | 28-06-2009 |
| | | CN 101687648 A | 31-03-2010 |
| | | EA 201000896 A1 | 30-06-2011 |
| | | EP 2118004 A1 | 18-11-2009 |
| | | GB 2460910 A | 23-12-2009 |
| | | HK 1139376 A1 | 17-09-2010 |
| | | JP 2012513944 A | 21-06-2012 |
| | | KR 20100105860 A | 30-09-2010 |
| | | TW 200946210 A | 16-11-2009 |
| | | US 2009169452 A1 | 02-07-2009 |
| | | US 2010132556 A1 | 03-06-2010 |
| | | US 2010135865 A1 | 03-06-2010 |
| | | US 2010135882 A1 | 03-06-2010 |
| | | US 2011059000 A1 | 10-03-2011 |
| | | US 2012213688 A1 | 23-08-2012 |
| | | WO 2009086460 A1 | 09-07-2009 |
| | | ZA 201004552 B | 28-09-2011 |
| US 2012183462 A1 | 19-07-2012 | NONE | |
| US 2017306510 A1 | 26-10-2017 | EP 3221493 A1 | 27-09-2017 |
| | | JP 6810034 B2 | 06-01-2021 |
| | | JP 2017534764 A | 24-11-2017 |
| | | JP 2021001403 A | 07-01-2021 |
| | | US 2017306510 A1 | 26-10-2017 |
| | | US 2020040467 A1 | 06-02-2020 |
| | | WO 2016079746 A1 | 26-05-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200040467 A
- WO 201784589 A

- WO 2019193283 A

**Non-patent literature cited in the description**

- **K.B.HATZELL ; Y. GOGOTSI et al.** *Electrochimica Acta,* 2013, vol. 111, 888-897